# EUROPEAN PATENT APPLICATION

(11) **EP 4 481 993 A1**
(43) Date of publication of application: **25.12.2024**
(21) Application number: 23180939.3
(22) Date of filing: 22.06.2023
(51) Int. Cl.: H02K 1/20

(54) **INTEGRATED COOLING CHANNEL IN STATOR**

(71) Applicant: Scania CV AB, 151 87 Södertälje (SE)
(72) Inventor: NESS, Christian, 155 92 Nykvarn (SE); BIRKESTAD, Per, 120 63 Stockholm (SE); ENGSTRÖM, Jörgen, 147 71 Grödinge (SE); AFRIDI, Usman, 152 31 Södertälje (SE)
(74) Representative: Scania CV AB

(57) **Abstract**

A stator (120) for an electrical machine (100), wherein the stator (120) comprises a plurality of stacked stator sheets (121). Each stator sheet (121) comprises a plurality of radially extending stator slots (125), radially arranged about a common central axis of the stator (120), wherein the stator slots (125) are located apart, equidistantly from each; and a plurality of holes (140), each arranged at a radial end-section (127) of a respective stator slot (125); and wherein the radially extending stator slots (125) of two adjacent stator sheets (121) are axially aligned with each other, while at least some adjacent holes (140) of two adjacent stator sheets (121) are displaced in relation to each other, thereby forming a respective flow obstruction (320) in an axially extending cooling channel segment (310) formed by the holes (140).

## Description

### TECHNICAL FIELD

This document discloses a stator for an electrical machine, an electrical machine and a vehicle comprising an electrical machine.

### BACKGROUND

Modern electric machines such as electric motors, generators and/ or alternators are often based on the concept of a rotor with magnets, coaxially arranged to rotate within a stator, in order to achieve required performance.

The stator comprises windings made by an electrically transmissive coil of wire. When the windings are provided with alternating current, magnets comprised in the rotor are affected and causes the rotor to start rotating.

Due to resistance in the windings, heat is developed. High power in limited machine size is often desired when electric machines are used in vehicle propulsion systems and similar industrial applications. To avoid overheating, cooling may be applied.

Existing electric machines of the above kind however exhibit poor cooling characteristics of the windings and the stator. Overheating of the stator will decrease efficiency of electric machines, affecting performance and lifetime of the involved components. Insulation layers may melt, for example.

It would be desired to find a solution addressing at least some of the above issues and improve cooling of electric machines, thereby improving capacity of high continuous power and torque.

### SUMMARY

It is therefore an object of this invention to solve at least some of the above problems and improve cooling capacity of a stator in an electric machine.

According to an aspect of the invention, this objective is achieved by a stator for an electrical machine, wherein the stator comprises a plurality of stacked stator sheets. Each stator sheet comprises a plurality of radially extending stator slots, radially arranged about a common central axis of the stator, wherein the stator slots are located apart, equidistantly from each. Also, each stator sheet comprises a plurality of holes, each arranged at a radial end-section of a respective stator slot.

The radially extending stator slots of two adjacent stator sheets are axially aligned with each other, while at least some adjacent holes of two adjacent stator sheets are displaced in relation to each other, thereby forming a respective flow obstruction in an axially extending cooling channel segment formed by the holes.

The lowest conductor in the middle of the stator is becoming the hotspot as electric machines having higher continuous power demand. By rotating at least some of the adjacent stator sheets in relation to each other, the holes that are forming the cooling channel are displaced in relation to each other, thereby creating a staggered cooling channel with flow obstructions, which has been discovered to increase cooling capacity. Hereby, a better continuous power and torque of the electric machine is achieved.

Reduced heat development, thanks to the improved cooling effect, leads to extended lifetime of the stator/ electrical machine.

Electromagnetic flux is essential for the operation of the electric machines. Interference with the electromagnetic flux in the electric machine may cause a variety of problems that affect both operation and lifetime of the electric machine.

By placing the holes forming the cooling channel at the radial end-section of the respective stator slot, interference with electromagnetic flux is minimised, or at least reduced.

Optionally, at least some adjacent holes of two adjacent stator sheets may have a different geometry, forming the flow obstruction in the cooling channel segment.

The flow obstruction of the cooling channel, which has shown to provide the improved cooling effect, may be applied in several different ways causing the same or similar improved cooling.

Optionally, each hole of the stator may be arranged at the radial end-section of the stator slot, at a radial distance shorter than a width of the stator slot.

By positioning the hole at the radial end-section of the stator slot, the cooling channel and thereby also the cooling effect is improved at the section close to the stator slot, where improved cooling is required the most.

Optionally, all stator sheets may comprise the same number of stator slots, and the same number of holes for forming the cooling channel segment. Also, the stator may comprise at least one stacked stator sheet that is rotated in relation to an adjacent stator sheet.

Hereby, the staggered cooling channel could be created with flow obstructions in a convenient way, for example by rotating one or some of the stacked stator sheet in relation to the adjacent stator sheet. The staggered cooling channel could thereby be constructed by using identical stacked stator sheets, which simplifies production and generation of the stator.

Optionally, at least two holes of each stator sheet, which holes are adjacent with each other in circumferential direction, may be geometrically different from each other, and/ or have different size, and/ or may be displaced differently in a radial and/ or circumferential direction in relation to the end section of a corresponding stator slot.

Hereby, alternative ways of conveniently producing the staggered cooling channel with flow obstructions are provided.

According to a second aspect of the invention, this objective is achieved by an electrical machine. The electrical machine may comprise a stator according to the first aspect, and a rotor, configured to operate coaxially inside the stator.

According to yet an aspect of the invention, this objective is achieved by a vehicle comprising an electrical machine according to the second aspect.

Other advantages and additional novel features will become apparent from the subsequent detailed description.

### FIGURES

Embodiments of the invention will now be described in further detail with reference to the accompanying figures, in which:
- **Figure 1A**: illustrates an electric machine according to an embodiment.
- **Figure 1B**: illustrates a plurality of stator sheets forming a stator according to an embodiment.
- **Figure 2**: illustrates a segment of a stator and a rotor according to an embodiment.

- **Figure 3**: illustrates a staggered cooling channel comprising flow obstructions, according to an embodiment.
- **Figure 4**: illustrates a vehicle comprising an electric machine with a stator according to an embodiment.

### DETAILED DESCRIPTION

Embodiments of the invention described herein are defined as a stator, an electrical machine comprising the stator and a vehicle comprising the electrical machine which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

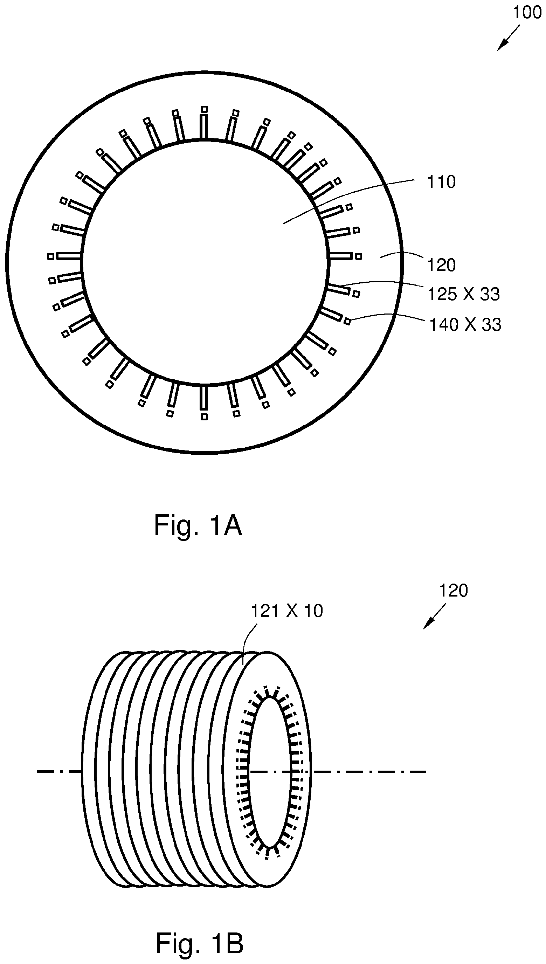

**Figure 1A** illustrates a cross section of an electrical machine 100, comprising a rotor 110 and a stator 120. The stator 120 is enclosing the coaxially arranged rotor 110.

The rotor 110 is rotatably disposed on an inward side of the stator 120 with an air gap distance between the rotor surface and the stator 120, creating a radial clearance distance between the rotor 110 and the stator 120. Thus, the rotor 110 forms a rotating part of the electrical machine 100 while the stator 120 forms a stationary part thereof.

The rotor 110 comprises a number of magnets creating a magnetic field which, when the rotor 110 is rotating, generates electrical current in the stator winding due to induction according to Faradays Law, when the electrical machine 100 operates in generator mode.

In the opposite case, i.e., when the electrical machine 100 operates in motor mode, a rotating magnetic field is created in the stator 120, as electrical current flows through the stator windings. This rotating magnetic field is cooperating with the permanent magnetic field of the magnets situated in the rotor 110, thereby causing the rotor 110 to rotate.

The stator 120 comprises a plurality of radially extending stator slots 125, radially arranged about a common central axis of the stator 120, wherein the stator slots 125 are located apart, equidistantly from each other. The part of the stator 120 between the stator slots 125 may be referred to as teeth.

The electrical machine 100 may be configured for converting electrical energy into mechanical energy thereby operating as an electric motor. The electrical machine 100 may also, or alternatively comprise an electric generator, which has the same configuration as an electric motor but operates with a reversed flow of power, converting mechanical energy into electrical energy.

The electrical machine 100 may be comprised in a vehicle and be configured to propel the vehicle while driving thereby operating as an electric motor. In case the vehicle is driving down-hill and/ or braking, the electrical machine 100 instead may operate as an electric generator, generating electricity which may be stored in a battery.

The stator slots 125 may be open, closed or semi-closed in different embodiments. The open stator slot 125 may have substantially flat walls extending to a radially inner delimiting surface of the stator 120. In other embodiments, the walls of the open stator slot 125 may have other configurations, e.g., a convex/ concave profile, an oval profile, etc. Open stator slots 125 are easily implemented. In the open stator slots 125, assembly and repair of winding are easy.

**Figure 1B** illustrates a stator 120 comprising a plurality of stacked stator sheets 121.

Each stator sheet 121 may be made in metal. The stator sheets 121 may have the thickness of for example between 0.05-5 mm, or e.g., 0.1-0.5 mm. A plurality of stator sheets 121 may be stacked together under pressure to form the stator 120, by usage of adhesive bonding, welding, clamping, and/ or other appropriate techniques.

Each stator sheet 121 also comprises a plurality of holes 140, each arranged at a radial end-section of a respective stator slot 125, i.e., at the winding slot bottom. The holes 140, when the stator sheets 121 are stacked together, forms an axially extending cooling channel, for evacuating heat from the stator 120.

In particular, heat is primarily generated in the (copper) windings around the teeth of the stator 120 during operation of the electrical machine 100. The resistance of the windings increases with increased temperature. The increased resistance leads to even more increased temperature in a vicious circle. This not only leads to increased energy loss but also decreases the magnetic field strength and thus affects the electromagnetic flux of the electrical machine 100.

By placing the holes 140 forming the cooling channel at the radial end-section of the respective stator slot 125, the temperature of these hotspots is decreased in the most efficient way. Thereby, also the interference with electromagnetic flux is minimised, or at least reduced. The radially extending stator slots 125 of two adjacent stator sheets 121 are axially aligned with each other, while at least some adjacent holes 140 of two adjacent stator sheets 121 are displaced in relation to each other, thereby forming a respective flow obstruction in an axially extending cooling channel segment formed by the holes 140.

The cooling channel segment may be fluidly connected to a cooling circuit for cooling the stator 120. The cooling circuit may comprise a pump for causing a cooling fluid such as oil to circulate through the cooling channels of the cooling circuit, and a heat exchanger where heat from the heated fluid is dissipated.

The coolant fluid may comprise for example oil, water, or a mixture of water and glycol. Oil has several advantages as coolant fluid. Oil has a higher boiling point than water and can be used for cooling the electrical machine 100, even if water cooling also may exceed 100 degrees Celsius when pressurised. Oil is also an electrical insulator, why an accidental leak from the cooling channel does not cause any hazard, besides, the interruption in cooling.

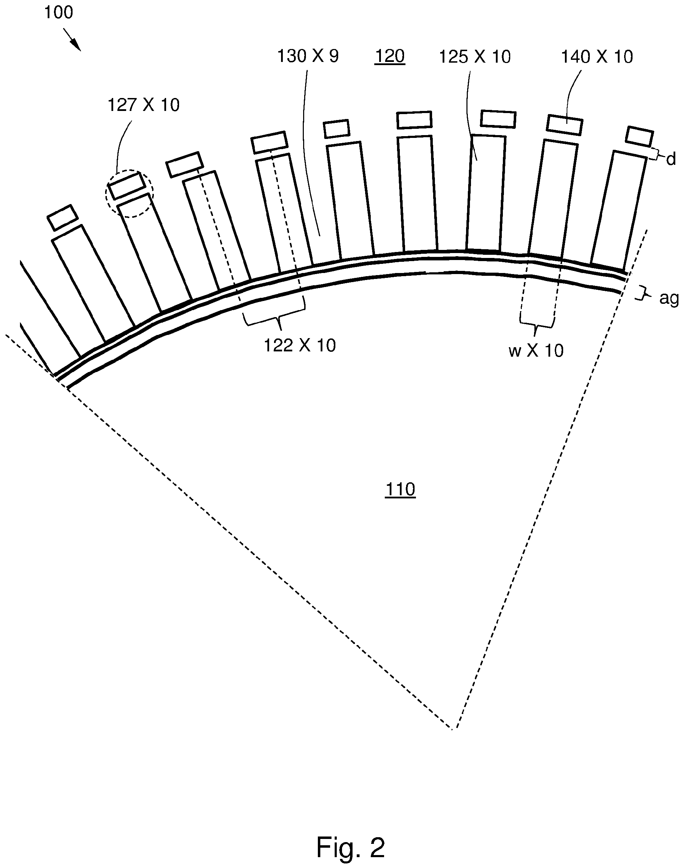

**Figure 2** illustrates a subsection of an electrical machine 100, and in particular a subsection of a stator sheet 121 of a stator 120.

The holes 140 on the stator sheet 121 are displaced and/ or disformed in axial direction of the stacked stator 120, thereby creating flow obstructions in the cooling channel.

In the illustrated example, the holes 140 have a substantially rectangular shape profile in a plane perpendicular to the rotation axis of the rotor 110.

However, in other embodiments, the holes 140 may have another shape profile such as for example circular, quadratic, triangular, parallelepipedal, etc. Different shape profile of holes 140 in at least some adjacent stator sheets 121 may thereby create flow obstructions in the cooling channel.

Each hole 140 in the respective stator sheet 121 may be arranged at the radial end-section 127 of the stator slot 125 at a radial distance d between the radial stator slot ending and the respective hole 140. The radial distance d may in some embodiments be shorter than a width w of the stator slot 125. The closer the hole 140 is to the radial end-section 127 of the stator slot 125, the better cooling effect could be expected.

The width w of the groove 130a, 130b, 130c, 130d may be substantially equal to a stator slot pitch 122 of the stator 120 in some embodiments.

The stator slot pitch 122 is the distance between the stator slots 125, as illustrated in Figure 2, in tangential direction. The width w of the stator slots 125 may in an embodiment be about: 0.8·(slot pitch distance) < w < 1.2·(slot pitch distance); or 0.95 (slot pitch distance) < w < 1.05·(slot pitch distance), in different embodiments. The width w of the stator slots 125 may be measured tangential to the surface of the rotor 110.

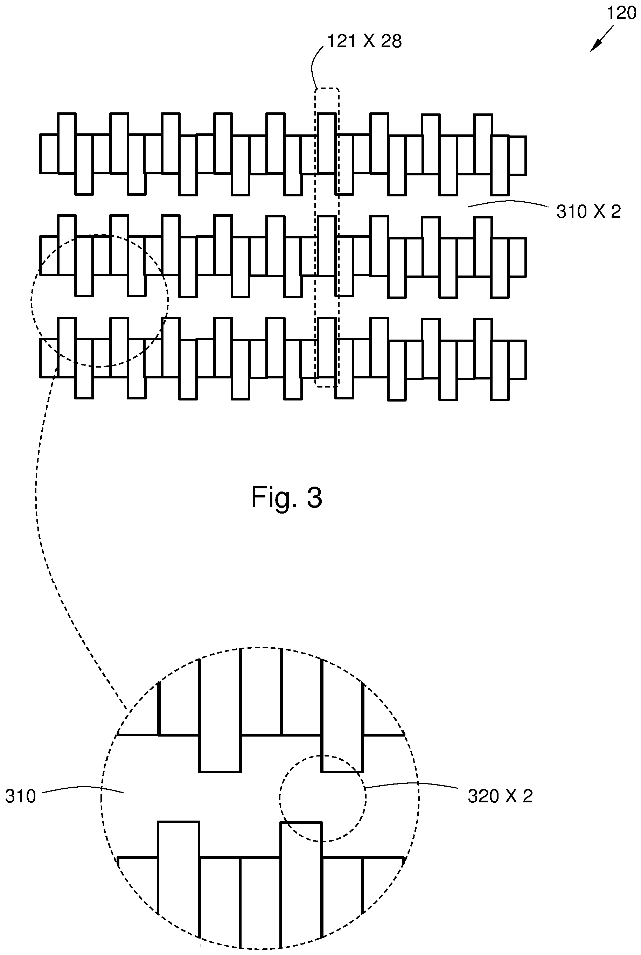

**Figure 3** illustrates a subsection of a stator 120 comprising a plurality of stacked stator sheets 121. The holes 140 in adjacent stator sheets 121 are displaced and/ or disformed in relation to each other. Also, the holes 140 in the stator sheets 121 at corresponding positions are forming a respective axially extending cooling channel segment 310.

At least some adjacent holes 140 of two adjacent stator sheets 121 are displaced in relation to each other, thereby forming a respective flow obstruction 320.

A cooling fluid such as oil is provided to and made to circulate within the cooling channel 310, for removing heat from the stator 120. The cooling effect is greatly enhanced by the additional turbulence created by the flow obstructions 320 in the cooling channel 310 in comparison with a laminar flow, for several reasons.

Firstly, the added turbulence caused by the flow obstruction 320 improves mixing of layers within the fluid. In a laminar flow (where the cooling fluid moves in straight paths), the heat transfer is primarily through conduction, and it tends to occur mostly at the fluid-to-surface boundary layer. This creates a temperature gradient across the fluid, meaning that fluid farther from the surface is cooler than that close to the surface. When turbulence is introduced, it disrupts these parallel layers within the fluid and causes the fluid to mix, bringing the cooler fluid into contact with the heated surface of the stator 120 and thus improving heat transfer. The added turbulence of the flow obstruction 320 also increases the heat transfer coefficient compared to laminar flow. This means that for the same surface area and temperature difference, more heat will be transferred in a turbulent flow situation. This is primarily due to the intense mixing and larger velocities associated with turbulent flows.

The boundary layer in fluid flow is the layer of fluid in the immediate vicinity of a bounding surface where the effects of viscosity of the fluid are considered in detail. In the thermal context, the boundary layer is where the temperature changes between the solid surface and the cooling fluid. Turbulence at the flow obstructions 320 tends to thin this boundary layer, bringing the bulk temperature of the fluid closer to the temperature of the surface, which improves the heat transfer.

By promoting better mixing and more uniform heat distribution, the turbulence caused by the flow obstruction 320 reduces the chance of localized overheating or "hot spots" at the surface of the stator 120.

The flow obstructions 320 created within the axially extending cooling channel segment 310 may be applied as to not impede the overall flow of the cooling fluid through the cooling channel 310, i.e., in a manner to ensure good flow rate through the cooling channel 310 while achieving desired turbulence for efficient cooling.

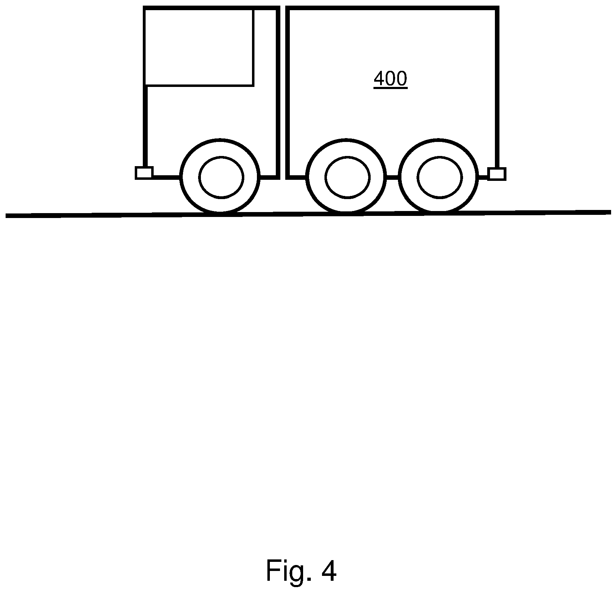

Figure 4 illustrates a vehicle 400 comprising an electrical machine 100 with a rotor 110 and a stator 120.

The vehicle 400 may be driver controlled or driverless autonomously controlled in different embodiments. The vehicle 400 may comprise a means for transportation in broad sense such as e.g., a truck, a car, a motorcycle, a trailer, a bus, a bike, a train, a tram, an aircraft, a watercraft, an unmanned underwater vehicle, a drone, a humanoid service robot, a spacecraft, or other similar manned or unmanned means of conveyance running e.g. on wheels, rails, air, water, intergalactic space or similar media.

The vehicle 400 may be an electric vehicle, a hybrid vehicle, a plug-in hybrid vehicle, etc., wherein the electrical machine 100 is configured for propelling the vehicle 400 and/ or for generating electrical energy for the vehicle 400 to use, depending on mode: motor mode or generator mode.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. The mere fact that certain measures are recited in mutually different dependent claims does not indicate that a combination of these measures cannot be used to advantage.

## Claims

1. A stator (120) for an electrical machine (100), wherein the stator (120) comprises a plurality of stacked stator sheets (121), wherein
each stator sheet (121) comprises
a plurality of radially extending stator slots (125), radially arranged about a common central axis of the stator (120), wherein the stator slots (125) are located apart, equidistantly from each; and
a plurality of holes (140), each arranged at a radial end-section (127) of a respective stator slot (125); and wherein
the radially extending stator slots (125) of two adjacent stator sheets (121) are axially aligned with each other, while
at least some adjacent holes (140) of two adjacent stator sheets (121) are displaced in relation to each other, thereby forming a respective flow obstruction (320) in an axially extending cooling channel segment (310) formed by the holes (140).

2. The stator (120) according to claim 1, wherein at least some adjacent holes (140) of two adjacent stator sheets (121) have a different geometry, forming the flow obstruction (320) in the cooling channel segment (310).

3. The stator (120) according to any one of the preceding claims, wherein each hole (140) is arranged at the radial end-section (127) of the stator slot (125), at a radial distance (d) shorter than a width (w) of the stator slot (125).

4. The stator (120) according to any one of the preceding claims, wherein all stator sheets (121) comprise the same number of stator slots (125), and holes (140) for forming the cooling channel segment (310) and wherein the stator (120) comprises at least one stacked stator sheet (121) that is rotated in relation to an adjacent stator sheet (121).

5. The stator (120) according to any one of the preceding claims, wherein at least two holes (140) of each stator sheet (121), which holes (140) are adjacent with each other in circumferential direction, are geometrically different from each other, and/ or have different size and/ or are displaced differently in a radial and/or circumferential direction in relation to the end section of a corresponding stator slot (125).

6. An electrical machine (100), comprising:
a stator (120) according to any one of claims 1-5; and
a rotor (110), configured to operate coaxially inside the stator (120).

7. A vehicle (400) comprising an electrical machine (100) according to claim 6.
